# EUROPEAN PATENT APPLICATION

(11) **EP 2 743 847 A1**
(43) Date of publication of application: **18.06.2014**
(21) Application number: 14154397.5
(22) Date of filing: 25.06.2008
(51) Int. Cl.: G06F 17/30, H04L 12/24, H04L 12/26

(54) **Targeted user notification of messages in a monitoring system**

(62) Divisional of application: 08779761.9
(71) Applicant: GVBB Holdings S.A.R.L, 2086 Luxembourg (LU)
(72) Inventor: Rodriguez, Northon, Oregon City, OR Oregon 97045 (US)
(74) Representative: Hill, Justin John

(57) **Abstract**

Herein describes is a system for mapping messages from monitored devices in a monitoring system comprising: a conversion module including a message listener to receive messages from at least one monitored device; an indexed database to store messages according to message criteria; a log manager to apply user-specified rules to incoming messages; and a mapping module to map the incoming messages to relevant messages for the user according to the user-specified rules.

## Description

### TECHNICAL FIELD

The present invention generally relates to computerized monitoring systems, and more particularly, to a system and method for managing and notifying users of messages received from monitored devices.

### BACKGROUND

Most monitoring systems contain logs listing messages detailing all the actions and functions of the network and its connected components so that the network administrator can review it in case there are unexpected problems to determine the cause of those problems. However, when using monitoring systems, users are often faced with a barrage of messages, many of which are not meaningful, important or necessary, or are redundant. Thousands of repeated messages can be generated, which fills up databases and slows does the overall monitoring system, thus rendering the monitoring system ineffective. The numerous messages can further distract from, impede and sometimes hide the genuinely important and relevant messages outlining issues and problems which must be addressed.

Indeed, one prevalent issue with monitoring multiple modules is the filtering and notification of alarms (messages), since managed modules typically send out a great number of false positives, causing operational personnel to spend a large amount of time chasing non-relevant events. Furthermore, the sheer number of messages/notifications received by users is often simply overwhelming. Exemplary ways to handle this problem include simply turning off the monitoring components or modules altogether, or suppressing broad categories of messages from being displayed to the user, which might run the risk of losing important relevant data and the user not being alerted to a genuine problem in the system. Another option is for the user or technician to manually sift through thousands of messages looking for clues that would help identify the problem the user is experiencing, which is enormously time-consuming and laborious.

### SUMMARY

In one embodiment according to the present principles, a system and method is provided for reducing the overall number of notifications to the user and customizing and mapping messages (e.g., general log messages) to particular users according to user-specified rules. Advantageously, customized and targeted notification to a user of messages is provided, thus reducing the number of notifications sent to a monitoring user in a monitoring system. In addition, the user is enabled to apply user-specified rules that identify whether of not an alert needs to be issued for a particular message. Accordingly, efficiency in user notification of system monitoring messages is improved, while unnecessary, redundant or superfluous notifications are reduced or eliminated, and users can customize and specify what type of and/or specific, actual messages they wish to be notified of.

Such is achieved via a targeted message notification system and method in which automatic notification filtering as well as an automatic log message conversion technique is provided. The user is able to customize an aging interval of a message depending on the period of time a user wishes to elapse before receiving additional notifications for that message. Further, a user can view and sort log messages based on device, device type, time/date, message urgency, etc. Users can also modify messages, add/modify a severity level, and link the message to a previous created rule as a reset. These messages are being generated, e.g., from an external source.

In one aspect of the present principles, a method of targeting message notifications in a monitoring system is provided comprising the steps of time-stamping a first message for indicating when a user was notified of said first message, setting an aging interval for the user-notified first message, determining if an identical message is received, and sending the user another notification of the first message if the aging interval of the user-notified first message has expired.

According to another aspect, a system for targeting message notifications in a monitoring system is provided comprising a notification module including a time set module for time-stamping a first message for indicating when a user was notified of said first message and setting an aging interval for the user-notified first message, and a monitoring module for determining if an identical message is received and sending the user another notification of the first message if the aging interval of the user-notified first message has expired.

According to yet another aspect, a system for mapping messages from monitored devices in a monitoring system is provided comprising a conversion module including a message listener for receiving messages from monitored devices, an indexed database for storing messages according to message criteria, a log manager for applying user-specified rules to incoming messages, and a mapping module for mapping the incoming messages to relevant messages for the user according to the user-specified rules.

These and other aspects, features and advantages of the present principles will be described or become apparent from the following detailed description of the preferred embodiments, which is to be read in connection with the accompanying drawings.

### BRIEF DESCRIPTION OF THE DRAWINGS

In the drawings, wherein like reference numerals denote similar elements throughout the views:
FIG. 1 is a block diagram of an exemplary targeted message notification and log message conversion system setup according to an aspect of the present principles;
FIG. 2 is a flow diagram of an exemplary method for targeting message notifications according to an aspect of the present principles;
FIG. 3 is a flow diagram of an exemplary method for translating incoming messages into relevant messages for a user; and
FIG. 4 is an exemplary dialog box which can be provided to enable a user to perform a log message conversion.

It should be understood that the drawings are for purposes of illustrating the concepts of the present principles and are not necessarily the only possible configurations for illustrating the present principles.

### DETAILED DESCRIPTION

A method, apparatus and system for targeted user notification of messages in a monitoring system is advantageously provided according to various aspects of the present principles. Although the present principles will be described primarily within the context of a monitoring system and method, the specific embodiments of the present principles should not be treated as limiting the scope of the invention. It will be appreciated by those skilled in the art and informed by the teachings of the present principles that the concepts of the present principles can be advantageously applied in any other environment in which a computer-related monitoring function is desired.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Thus, for example, it will be appreciated by those skilled in the art that any block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

Advantageously, according to one aspect of the present principles, a system and method for targeting user-notification of messages in a network monitoring system is heretofore provided. According to another aspect, a system and method is provided for automatic conversion of general log messages into user-related notification. The system and method according to the present principles can advantageously be incorporated and utilized in any network in need of monitoring actions, such as e.g., performance or security monitoring.

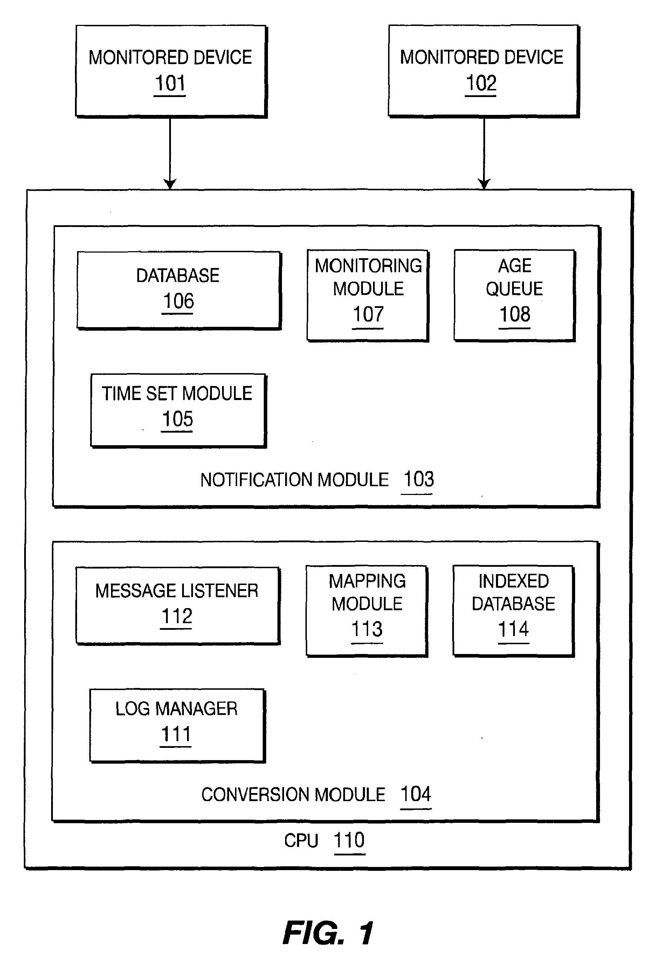

Referring now to the Figures, FIG. 1 is a block diagram of an exemplary targeted message notification and log message conversion system setup according to an aspect of the present principles. A notification module 103 and a conversion module 104 can be provided embodied, for example, in a CPU (central processing unit), e.g., the central unit in a computer having the logic circuitry that performs the instructions of a computer's programs. The monitoring device/CPU 110 can be connected to user interface devices, such as a display and keyboard/mouse, etc. and further is connected to at least one monitored device 101, 102. Monitored devices can comprise, e.g., any devices which are desired to be monitored on a network or devices which are monitored singly.

The notification module 103 is configured for performing targeted message notification filtering according to one aspect of the present principles. The conversion module 104 is configured for performing translation and conversion of general log messages into user-relevant information messages according to another aspect of the present principles.

The notification module 103 preferably includes at least a Time set module 105, a database 106, a monitoring module 107 and an age queue 108, and can be configured to be in communication with any device 101, 102 which is desired to be monitored, as well as with the conversion module 104. Monitored devices can be connected via a network which can comprise, e.g., any type of computer network, such as a local area network (LAN). Generally, the notification module 103 is configured to monitor, detect, manage and filter message notifications to users.

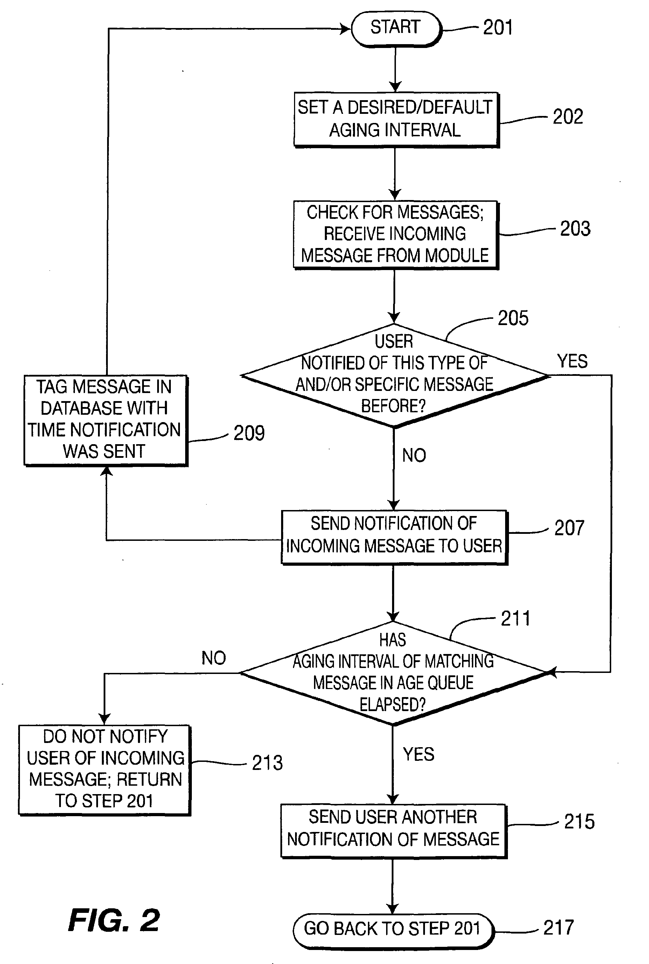

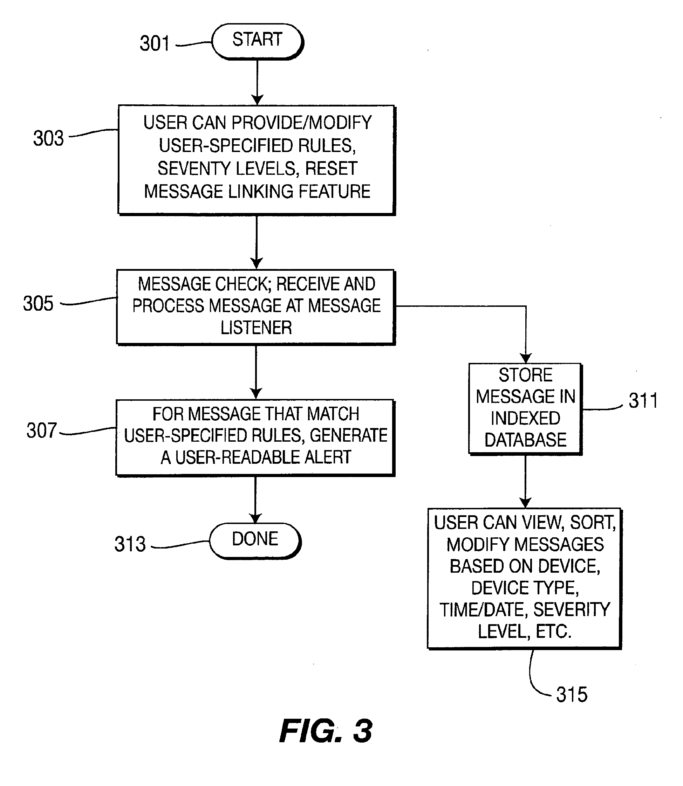

The conversion module 104 preferably includes at least a log manager 111, a message listener 112, a mapping module 113 and an indexed database 114. The functions of the various components of the notification module 103 and the conversion module 104 will be further discussed with respect to FIGS. 2 and 3.

Exemplary definitions for terms used in this disclosure are as follows:
*Age Queue:* This is a logical staging area in which a message is stored until its aging time is expired.
*Aging Time Interval*: This is the duration of time a message remains in the age queue. The system stores the message for the Aging Time interval, during which time the message will be accessible for purposes of determining whether a new message should be notified to the user. The Aging Time Interval can be specified by a user and customized for particular types of messages or particular message instances. In addition, a default Aging Time Interval can be set.
*Maximum Aging Time:* The maximum amount of time a message remains in the Age Queue.

In one aspect, the notification module 103 provides an automatic message notification filtering feature in which the number of message notifications sent to a user is based on an automatic tag of the message combined with a time stamp. The notification module 103 can set an Aging Time Interval (e.g., by default or in accordance with a user entry) during which an incoming message, once notified to the user, would 'age' or be stored. That is, when receiving a first message, a notification would be sent to the user, and the message would be tagged in the database with the date/time the notification was sent.

If a subsequent message is received which is the same as (identical) (or is determined to be a same (identical) message type as) the message already notified to the user, and the message previously notified to the user is still in the age queue, no notification will be sent to the user of the subsequent message. Advantageously, the overall number of message notifications sent to a user is accordingly significantly reduced. This prevents requiring the user to sift through thousands of repeated messages, allowing the user to focus attention on messages which are more likely to indicate potential problems and issues in need of resolution.

A system and method according to the present principles also provides a mechanism to translate or convert any type of message into more meaningful or relevant messages pertinent to a particular user. This is enabled via a log message conversion module 104 which applies user-specified rules to messages to identify whether or not an alert needs to be issued or generated for that message to a particular user. Messages for all devices can be stored in a highly indexed database according to various categories, e.g., a level of message severity or urgency, types of devices the messages are from (device type), specific devices the messages are from (device instance), the time/date at which the messages were received, etc. Users can view and sort log messages based on the various categories, and can modify messages, add or modify severity levels, and link a message to a previous rule as a reset message.

FIG. 2 is a flow diagram of an exemplary method for targeting message notifications according to an aspect of the present principles. After start 201, a user can specify a desired Aging Time Interval and/or a default Aging Interval (step 202). The user can enter/revise the Aging Time Interval at any time. If no time is specified, a default Aging Time Interval can be used by the system. In step 203, the system (e.g., the monitoring module 107) checks for incoming messages from monitored devices. If an incoming message is received, the process proceeds to decision block 205 in which it is determined whether the user has been previously notified of the same message, or the same type of message. That is, a database 106 or age queue 108 can be accessed and searched to see if a same message or similar message type exists in an aging queue. If no, the user is sent a notification for the message (step 207) and the message is tagged in a database 106 (and/or age queue 108) with the time/date that the notification was sent to the user. The process returns to step 201.

If the user has previously been notified of the 'same' message, that is, the same specific message (e.g., from a specific device type - e.g., from a Windows or MAC device; or a specific device instance - e.g., from a particular device) and/or a same type of message (e.g., a warning, critical alert, status check, etc.), it is determined if an aging interval of a matching message in the age queue has expired (step 211). A 'matching' message can comprise, e.g., a prior received message which is determined to be a same type of or the same specific message as the incoming message. If the Aging Time interval of the matching message has not expired, the user is not notified of the incoming message and the process returns to step 201 (step 213). Thus, no notification of the incoming message is given to the user. If it is determined that the Aging Time interval of the matching message has elapsed, the user is sent a notification of the incoming message (step 215) and the method returns to step 210 (step 217).

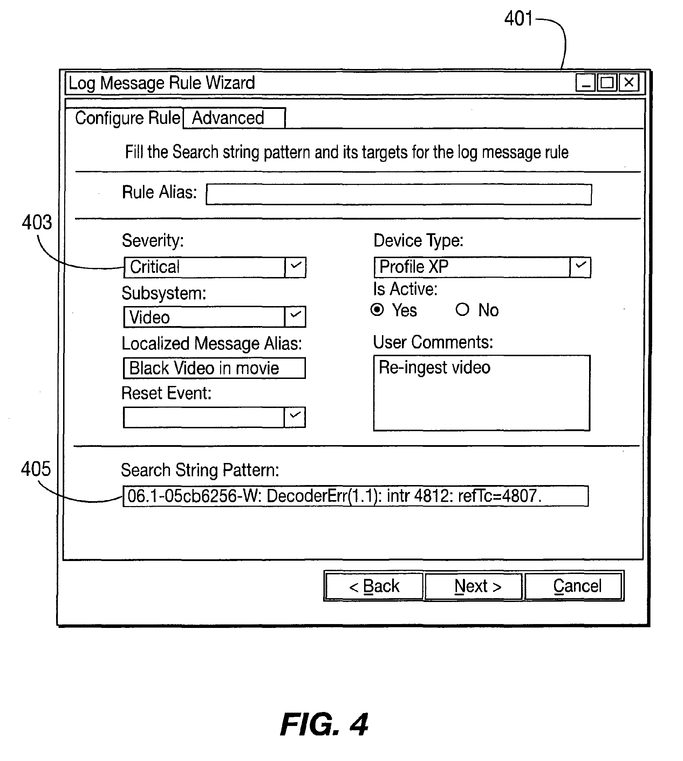

FIG. 3 is a flow diagram of an exemplary method for translating and converting incoming messages (e.g., "log messages") into relevant messages for a user. 'Relevant' messages can comprise messages which are pertinent to a particular user and are in a more readily readable/decipherable form for the user. After Start 301, a user can provide rules (user-specified rules) which can dictate, e.g., for which log messages an alert is desired to be issued. Exemplary user-specified rules can comprise, mapping a cryptic message 405 like the following, as shown in FIG. 4, which depicts an exemplary dialog box 401 which can be provided to enable a user to perform the log message conversion:
06.1-0593990-W:DecoderErr(0,0) intr 9031:refTC-9027, 'Buffer
   Into a message that states - "Black Video in movie"

The user can further specify message severity levels (e.g., via severity tab 403) to specify the levels of urgency/importance and/or the alarm type to be associated with various log messages, subsystem that the message should be mapped. Furthermore, a linking feature can be provided so as to produce an automatic reset message when a log message is seen stating that the problem is resolved. That is, a log message which is received that states that a problem is resolved is automatically mapped to a reset message. This feature allows automatic message reduction and filtering in a user view (that is, reduction in the number of messages actually displayed to the user) by creating inactive messages automatically when a problem is fixed or resolved.

In step 305, a message check is performed, and any received messages are processed to determine message information, such as, e.g., severity level, device type, device instance, etc. The processed messages are stored in an indexed database (step 311) which stores messages for all devices according to various categories and criteria (severity, device type, device instance, date/time, etc.) The user can view and sort messages based on various criteria such as device, device type, time/date, severity level, etc. (step 315). In addition, in step 307 the user-specified rules are applied to incoming messages (e.g., via mapping module 113) and incoming messages that match user-specified rules are converted or mapped to a more meaningful format relevant or pertinent to a particular user. Following step 307, the system is done (step 313).

Although the embodiment which incorporates the teachings of the present principles has been shown and described in detail herein, those skilled in the art can readily devise many other varied embodiments that still incorporate these teachings. Having described preferred embodiments for a system and method for message management and suppression in a monitoring system (which are intended to be illustrative and not limiting), it is noted that modifications and variations can be made by persons skilled in the art in light of the above teachings. It is therefore to be understood that changes can be made in the particular embodiments of the present principles disclosed which are within the scope and spirit of the present principles as outlined by the appended claims. Having thus described the present principles with the details and particularity required by the patent laws, what is claimed and desired protected is set forth in the appended claims.

The invention may be further defined with respect to the following clauses:
1. A method, comprising the steps of:
   time-stamping a first message to indicate when a user was notified of said first message;
   setting an aging interval for the user-notified first message;
   determining if a second message corresponds to said first message; and
   sending the user another notification of the second message if the aging interval of the user-notified first message has expired.
2. The method of clause 1, further comprising the step of:
   setting at least one of a user-desired aging interval time and a default aging interval time.
3. The method of clause 1, further comprising the step of:
   establishing a corresponding message based on at least one of an identical message received or an identical message type received.
4. The method of clause 1, wherein the step of time-stamping comprises:
   receiving an incoming message from a device;
   determining if the user has been notified of the incoming message; and
   sending the user a notification of the incoming message if the user has not been previously notified of the incoming message.
5. The method of clause 4, wherein the step of determining comprises:
   determining if the user has been previously notified of at least one of an identical type of or identical message as the incoming message.
6. The method of clause 1, further comprising the step of:
   utilizing an aging interval based on a duration of time during which the user-notified message is stored in an aging queue.
7. The method of clause 6, wherein the step of determining whether the identical message has been received comprises:
   comparing a new incoming message from a monitored device to the stored messages in the aging queue.
8. A system, comprising:
   a notification module including a time set module for time-stamping a first message to indicate when a user was notified of said first message and setting an aging interval for the user-notified first message; and
   a monitoring module for determining if a second message corresponding to the first message is received and sending the user another notification of the first message if the aging interval of the user-notified first message has expired.
9. The system of clause 8, wherein the time set module is configured for setting at least one of a user-desired aging interval time and a default aging interval time.
10. The system of clause 8, wherein the same message comprises at least one of an identical message or an identical message type.
11. The system of clause 8, wherein the monitoring module is further configured to receive an incoming message from a device, determine if the user has been notified of the incoming message, and send the user a notification of the incoming message if the user has not been previously notified of the incoming message.
12. The system of clause 11, wherein the monitoring module is further configured to determine if the user has been previously notified of at least one of an identical type of or identical message as the incoming message.
13. The system of clause 8, further comprising:
   an age queue for storing the user-notified message for a duration of time equal to its aging interval.
14. The method of clause 13, wherein the monitoring module is further configured to determine whether an identical message has been received by comparing a new incoming message from a monitored device to the stored messages in the age queue.
15. A system for mapping messages from monitored devices in a monitoring system comprising:
   a conversion module including a message listener to receive messages from at least one monitored device;
   an indexed database to store messages according to message criteria;
   a log manager to apply user-specified rules to incoming messages; and
   a mapping module to map the incoming messages to relevant messages for the user according to the user-specified rules.
16. The system of clause 15, wherein the user-specified rules include a message severity level.
17. The system of clause 16, wherein the message criteria comprises at least one of a severity level, device type, device instance and time/date.
18. The system of clause 15, wherein the log manager is further configured to enable a user to modify the mapped messages and to link a message to a desired user-specified rule.
19. The system of clause 15, wherein a relevant message to a user comprises a message which is readable and pertinent to a particular user.
20. The system of clause 15, wherein the user-specified rules identify whether or not to issue an alert for the incoming message.
21. The system of clause 15, wherein the log manager is configured to automatically link log messages indicating a resolved problem into a reset message.

## Claims

1. A system for mapping messages from monitored devices in a monitoring system comprising:
a conversion module including a message listener to receive messages from at least one monitored device;
an indexed database to store messages according to message criteria;
a log manager to apply user-specified rules to incoming messages; and
a mapping module to map the incoming messages to relevant messages for the user according to the user-specified rules.

2. The system of claim 1, wherein the user-specified rules include a message severity level.

3. The system of claim 2, wherein the message criteria comprises at least one of a severity level, device type, device instance and time/date.

4. The system of claim 1, wherein the log manager is further configured to enable a user to modify the mapped messages and to link a message to a desired user specified rule.

5. The system of claim 1, wherein a relevant message to a user comprises a message which is readable and pertinent to a particular user.

6. The system of claim 1, wherein the user-specified rules identify whether or not to issue an alert for the incoming message.

7. The system of claim 1, wherein the log manager is configured to automatically link log messages indicating a resolved problem into a reset message.
